# EUROPÄISCHE PATENTANMELDUNG

(11) **EP 2 481 990 A1**
(43) Veröffentlichungstag der Anmeldung: **01.08.2012**
(21) Anmeldenummer: 12000474.2
(22) Anmeldetag: 25.01.2012
(51) Int. Cl.: F24C 15/16, A47L 15/50

(54) **Auszugsführung für einen Backofen oder für eine Spülmaschine**

(30) Priorität: 01.02.2011 DE 102011010004; 07.12.2011 DE 102011120736
(71) Anmelder: Laag S.r.l., 39040 Montagna (IT)
(72) Erfinder: Puiu, Adrian, 38010 Spormaggiore (TN) (IT); Meurer, Gerold, 39040 Margreid (BZ) (IT); Zanotelli, Adriano, 38123 Ravina (TN) (IT)
(74) Vertreter: Zinnecker, Armin

(57) **Zusammenfassung**

Eine Auszugsführung für einen Backofen oder für eine Spülmaschine umfaßt eine Führungsschiene (1), eine Laufschiene (2) und Wälzkörper (5), die an der Führungsschiene (1) und/oder der Laufschiene (2) abrollen und die in einem Käfig (4) gehalten sind. Um eine Auszugsführung vorzuschlagen, die auch für hohe Temperaturen geeignet ist, umfaßt die Auszugsführung einen temperaturfesten Festschmierstoff zum Schmieren der Abrollbewegung der Wälzkörper (5) (Fig. 1).

## Beschreibung

Die Erfindung betrifft eine Auszugsführung für einen Backofen oder einen sonstigen Ofen oder ein sonstiges Hochtemperaturgerät oder für eine Spülmaschine.

Eine Auszugsführung nach dem Oberbegriff des Anspruchs 1 ist aus der DE 10 2008 046 978 A1 bekannt. Die Auszugsführung umfaßt eine Führungsschiene, eine Laufschiene und Wälzkörper, die an den Schienen abrollen und die in einem Käfig gehalten sind. Im übrigen wird auf die DE 10 2008 046 978 A1 hiermit ausdrücklich Bezug genommen.

Bei Öfen, insbesondere bei Backöfen, insbesondere bei Haushaltsbacköfen ist oft eine pyrolytische Selbstreinigungs-Funktion vorhanden. Dabei wird der Backofen auf eine hohe Temperatur von etwa 500° C aufgeheizt, wodurch die in dem Backofen vorhandene Verschmutzung verbrennt. Danach kann die dadurch entstandene, staubige Asche auf einfache Weise mit einem feuchten Lappen entfernt werden.

In Backöfen ist es allerdings auch wünschenswert, Auszugsschienen zum Einschieben und Herausziehen von Backblechen zu verwenden. Derartige Auszugsschienen müssen geschmiert werden. Die Schmierung muß dabei durch ein Fett erfolgen, das für den Lebensmittelkontakt zugelassen ist. Bei der Temperatur, die bei der Pyrolyse erreicht wird, verbrennen jedoch die für den Lebensmittelkontakt zugelassenen Schmierfette und stehen nach der Pyrolyse für die Schmierung nicht mehr zur Verfügung.

Aus der DE 10 2008 059 909 A1 ist ein metallisches Bauteil für den Einsatz in Backöfen im Hochtemperaturbereich bekannt, auf welches eine Plasmapolymerschicht aufgebracht ist, insbesondere ein siliciumhaltiges Plasmapolymer mit einer Temperaturbeständigkeit im Bereich von 300 - 600° C.

Die DE 10 2009 044 340 A1 offenbart ein Bauteil für den Einsatz in Haushaltsgeräten, auf das eine anorganisch-organische Hybridpolymerschicht aufgebracht ist, wobei das Aufbringen dieser Schicht nach einem Sol-Gel Verfahren erfolgen kann. Hierdurch soll eine Temperaturbeständigkeit von mindestens 400° C erreicht werden.

Bei Spülmaschinen wird das Geschirr durch eine Reinigungsflüssigkeit gereinigt, die ein chemisch wirksames Reinigungsmittel enthält und die unter hohem Druck und hoher Temperatur auf das Geschirr und die Funktionsteile in der Spülmaschine auftrifft. Die Funktionsteile müssen den chemischen, mechanischen und thermischen Belastungen der Reinigungsflüssigkeit standhalten. Metallische Funktionsteile werden in Spülmaschinen insbesondere zur Bewegung des Geschirrkorbes eingesetzt.

Aufgabe der Erfindung ist es, eine verbesserte Auszugsführung für einen Backofen oder dergleichen oder für Spülmaschinen vorzuschlagen, die den dort herrschenden Belastungen standhalten.

Erfindungsgemäß wird diese Aufgabe durch eine Auszugsführung mit den Merkmalen des Anspruchs 1 gelöst. Die Auszugsführung umfaßt eine Führungsschiene, eine Laufschiene und Wälzkörper, die an der Führungsschiene und/oder der Laufschiene abrollen und die in einem Käfig gehalten sind. In der Auszugsführung ist ein temperaturfester Festschmierstoff zum Schmieren der Abrollbewegung der Wälzkörper vorhanden. Unter einem temperaturfesten Festschmierstoff wird dabei ein solcher Festschmierstoff verstanden, dessen Schmierfähigkeit auch bei einer Temperatur, die bei der pyrolytischen Selbstreinigung erreicht wird, erhalten bleibt. Insbesondere handelt es sich um einen Festschmierstoff, der bis zu einer Temperatur von 400 - 600° C temperaturfest ist, insbesondere bis zu einer Temperatur von 500° C.

Die Erfindung bringt den weiteren Vorteil mit sich, daß die erfindungsgemäße Auszugsführung für einen Backofen in einer Spülmaschine gereinigt werden kann. Die durch den Waschvorgang in der Spülmaschine entfernte Schmierstoffschicht wird nach dem Einbau der gereinigten Auszugsführung in den Backofen wieder erzeugt. Dies geschieht durch die Bewegung der Auszugsführung. Durch die Bewegung der Auszugsführung kann Festschmierstoff abgerieben und als Schmierstoff aufgetragen werden.

Vorteilhafte Weiterbildungen sind in den Unteransprüchen beschrieben.

Als temperaturfeste Festschmierstoffe sind Graphit oder Molybdänsulfid besonders geeignet. Ganz besonders geeignet ist Graphit mit isotropischer Struktur, da Formstücke daraus ganz besonders temperaturstabil sind.

Nach einer weiteren vorteilhaften Weiterbildung sind in dem Käfig Wälzkörper eingesetzt, die aus dem temperaturfesten Fettschmierstoff bestehen. Es kann allerdings auch ausreichend sein, wenn lediglich die Oberfläche des oder der Wälzkörper aus dem temperaturfesten Festschmierstoff besteht. In beiden Fällen kann es ausreichen, wenn der oder die Wälzkörper den temperaturfesten Festschmierstoff enthalten. Anstelle von Wälzkörpern oder zusätzlich zu diesen können auch Gleitkörper in dem Käfig eingesetzt sein, die oder deren Oberfläche aus dem temperaturfesten Festschmierstoff bestehen oder den temperaturfesten Festschmierstoff enthalten.

Eine weitere vorteilhafte Weiterbildung ist dadurch gekennzeichnet, daß der Käfig aus dem temperaturfesten Festschmierstoff besteht. Es kann auch ausreichend sein, wenn der Käfig den temperaturfesten Festschmierstoff enthält. In beiden Fällen ist es möglich, daß eine oder mehrere oder alle Kontaktflächen des Käfigs mit einem oder einigen oder allen Wälzkörpern aus dem temperaturfesten Festschmierstoff bestehen oder den temperaturfesten Festschmierstoff enthalten.

Nach einer weiteren vorteilhaften Weiterbildung umfaßt die Auszugsführung eine Zwischenschiene und einen weiteren Käfig mit weiteren Wälzkörpern. Der weitere Käfig und/oder dessen Wälzkörper sind vorzugsweise wie beschrieben ausgestaltet, also in der Weise, daß sie oder ihre Oberflächen aus einem temperaturfesten Festschmierstoff bestehen oder einen temperaturfesten Festschmierstoff enthalten.

Die Erfindung betrifft ferner einen Backofen oder eine Spülmaschine mit einer oder mehreren erfindungsgemäßen Auszugsführungen.

Ausführungsbeispiele der Erfindung werden nachstehend anhand der beigefügten Zeichnung im einzelnen erläutert. In der Zeichnung zeigt
- Fig. 1: die Bestandteile einer Auszugsführung für einen Backofen oder für eine Spülmaschine, nämlich eine Führungsschiene, eine Laufschiene, ein Käfig mit Wälzkörpern, eine Zwischenschiene und ein weiterer Käfig mit weiteren Wälzkörpern in einer perspektivischen Darstellung,

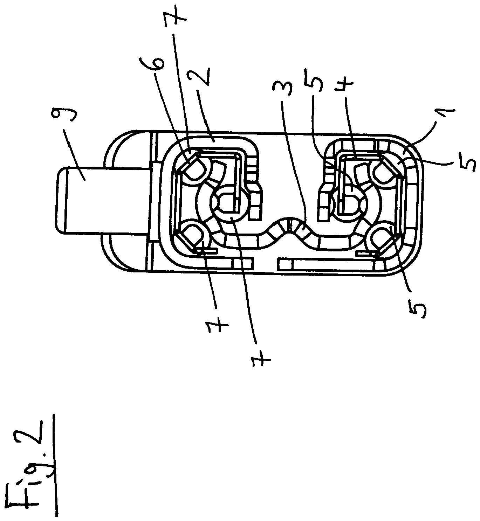

- Fig. 2: die Auszugsführung gemäß Fig. 1 im montierten Zustand in einem Querschnitt,

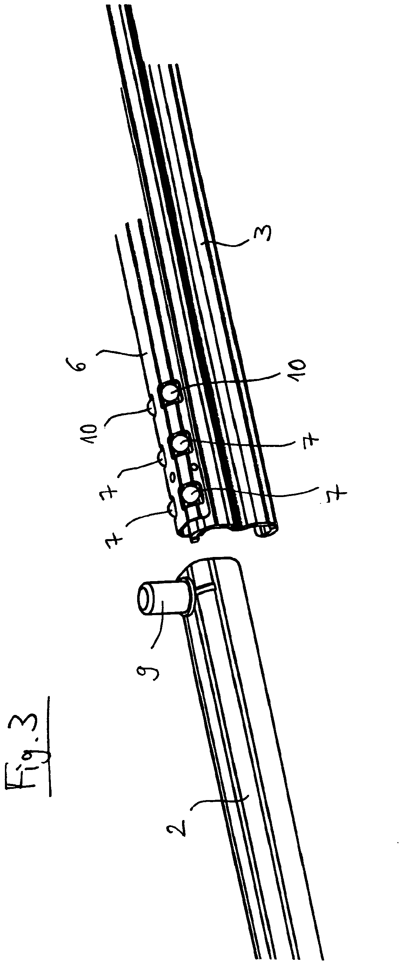

- Fig. 3: die Auszugsführung gemäß Fig. 1 und 2 im teilweise montierten Zustand in einer perspektivischen Darstellung,
- Fig. 4: eine Abwandlung der Auszugsführung gemäß Fig. 1 bis 3 mit Gleitkörpern in einer der Fig. 3 entsprechenden, perspektivischen Darstellung und
- Fig. 5: eine weitere Abwandlung der Auszugsführung, bei der die Kontaktflächen des Käfigs mit den Wälzkörpern aus einem temperaturfesten Festschmierstoff bestehen, in einer Seitenansicht.

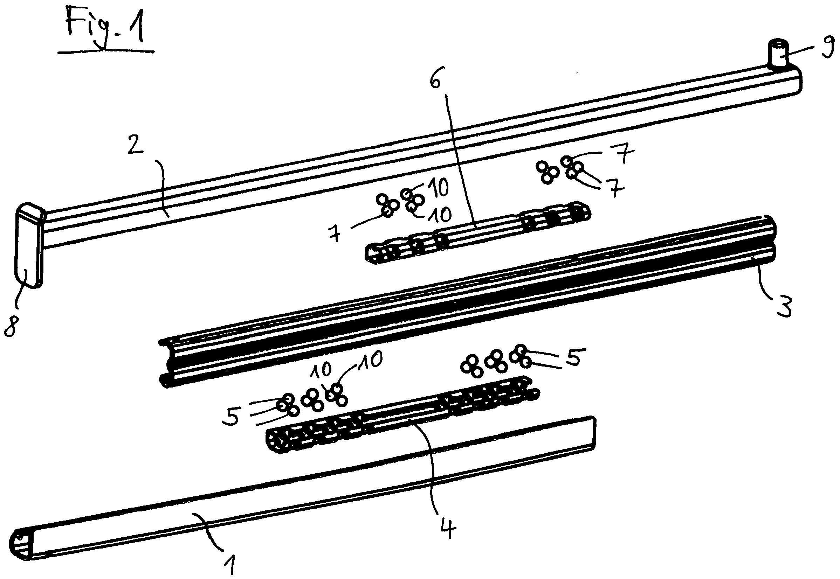

Fig. 1 zeigt die Bestandteile einer Auszugsführung, nämlich eine Führungsschiene 1, eine Laufschiene 2, eine Zwischenschiene 3, einen Käfig 4, in dem Wälzkörper 5 gehalten sind, und einen weiteren Käfig 6, in dem weitere Wälzkörper 7 gehalten sind. Die Wälzkörper 5, 7 sind als Kugeln ausgebildet. Die Wälzkörper 5, die in dem Käfig 6 gehalten sind, rollen an der Führungsschiene 1 und an der Zwischenschiene 3 ab. Die weiteren Wälzkörper 7 des weiteren Käfigs 6 rollen an der Zwischenschiene 3 und an der Laufschiene 2 ab. Durch die Käfige 4, 6 werden die Wälzkörper 5, 7 in Position gehalten.

Die Führungsschiene 1 ist an einem Backofen befestigbar oder befestigt, insbesondere an einer Innenwand des Backofens. An einem Ende der Laufschiene 2 ist eine Abdeckung 8 vorhanden. Am anderen Ende der Laufschiene 2 befindet sich ein Anschlagstift 9, der die Bewegung der Laufschiene 2 begrenzt. Auf die Laufschiene 2 kann ein Backblech oder ähnliches aufgelegt werden.

Zusätzlich zu den tragenden Wälzkörpern 5, 7 sind in den Käfigen 4, 6 Wälzkörper 10 eingesetzt, die aus einem temperaturfesten Festschmierstoff wie beispielsweise Graphit oder Molybdänsulfid hergestellt sind. Bei der Bewegung der Schienen 1, 2, 3 verschleißen diese Wälzkörper 10 und tragen auf diese Weise den Festschmierstoff, aus dem sie bestehen, kontinuierlich auf die Schienen 1, 2, 3 auf. Auf diese Weise dient der Abrieb des temperaturfesten Festschmierstoffs zum Schmieren der Abrollbewegung der tragenden Wälzkörper 5, 7.

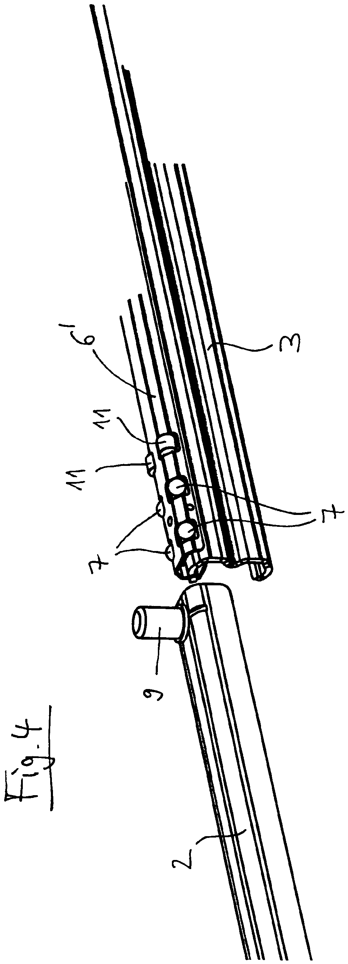

Bei der abgewandelten Ausführungsform, die in Fig. 4 dargestellt ist, sind entsprechende Bauteile mit denselben Bezugszeichen versehen. Hier sind in dem weiteren Käfig 6' Gleitkörper 11 eingesetzt, die aus einem temperaturfesten Festschmierstoff hergestellt sind. Die Gleitkörper 11 sind als Zylinder ausgebildet, deren Achsen in Längsrichtung der Schienen 1, 2, 3 und damit in Bewegungsrichtung der Schienen 1, 2, 3 verlaufen.

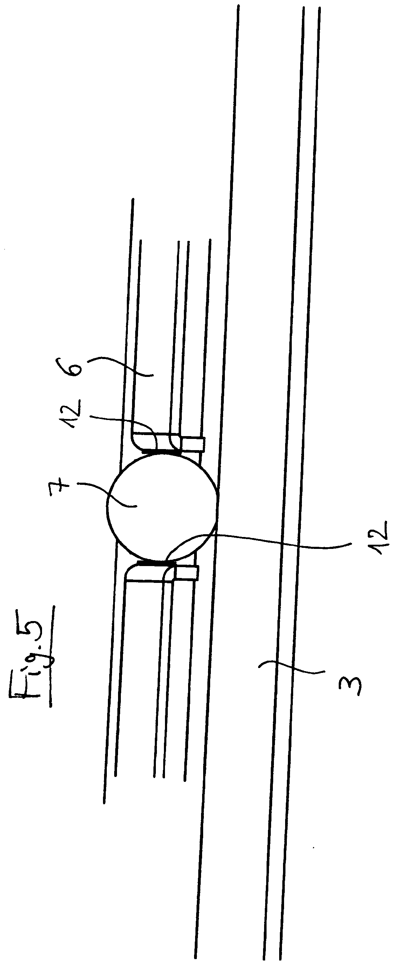

Bei der weiteren abgewandelten Ausführungsform nach Fig. 5, bei der wieder entsprechende Bauteile mit denselben Bezugszeichen versehen sind, bestehen die Kontaktflächen 12 des weiteren Käfigs 6 mit den weiteren Wälzkörpern 7 aus einem temperaturfesten Festschmierstoff. Bei einer Bewegung der Auszugsführung nimmt der sich in seiner Aufnahme drehende Wälzkörper 7 durch diese Relativbewegung den Schmierstoff von den Kontaktflächen 12 auf und trägt diesen auf die zugehörigen Schienen 2, 3 auf. Dies ist vergleichbar mit einem Kugelschreiber, bei dem die Kugel die Farbe aufnimmt und auf das Papier überträgt. Die Schichtdicke der Kontaktflächen 12 ist vorzugsweise in Abhängigkeit von der gewünschten Lebensdauer gewählt.

Durch die Erfindung wird eine Auszugsführung geschaffen, bei der die Fettschmierung durch einen Festschmierstoff ersetzt ist. Die Erfindung beruht darauf, den Festschmierstoff über die Laufflächen der Wälzkörper gleiten zu lassen. Dabei wird ständig Festschmierstoff aufgetragen. Hierzu ist es möglich, in die Käfige zusätzlich zu den tragenden Wälzkörpern Wälzkörper aus Festschmierstoff einzusetzen.

Als Wälzkörper können Kugeln, Walzen, Nadeln und sonstige Wälzkörper verwendet werden. Die Wälzkörper werden durch Käfige gehalten. Es findet eine indirekte Schmierung über temperaturfeste Festschmierstoffe statt. Die Schmierung erfolgt durch den Abrieb der Festschmierstoffelemente. Diese können zusammen mit den tragenden Wälzkörpern in gleicher Form wie die Wälzkörper in dem Käfig eingesetzt werden. Bei der Bewegung der Schienen verschleißen die Wälzkörper und tragen so den Festschmierstoff kontinuierlich auf die Laufschienen und tragenden Wälzkörper auf. Die Festschmierstoffelemente können auch als Gleitelemente in den Käfig eingesetzt werden. Eine weitere Alternative besteht darin, den Käfig aus einem Material, das den Festschmierstoff enthält, herzustellen.

## Patentansprüche

1. Auszugsführung für einen Backofen oder für eine Spülmaschine
mit einer Führungsschiene (1), einer Laufschiene (2) und Wälzkörpern (5), die an der Führungsschiene (1) und/oder der Laufschiene (2) abrollen und die in einem Käfig (4) gehalten sind,
**gekennzeichnet durch**
einen temperaturfesten Festschmierstoff zum Schmieren der Abrollbewegung der Wälzkörper (5).

2. Auszugsführung nach Anspruch 1, **dadurch gekennzeichnet, daß** der temperaturfeste Festschmierstoff Graphit oder Molybdänsulfid ist.

3. Auszugsführung nach Anspruch 1 oder 2, **dadurch gekennzeichnet, daß** in dem Käfig (4) Wälzkörper (10) und/oder Gleitkörper (11) eingesetzt sind, die oder deren Oberfläche aus dem temperaturfesten Festschmierstoff bestehen oder den temperaturfesten Festschmierstoff enthalten.

4. Auszugsführung nach einem der hervorgehenden Ansprüche, **dadurch gekennzeichnet, daß** der Käfig (4) oder Kontaktflächen (12) des Käfigs (4) mit
den Wälzkörpern (5) aus dem temperaturfesten Festschmierstoff bestehen oder den temperaturfesten Festschmierstoff enthalten.

5. Auszugsführung nach einem der vorhergehenden Ansprüche, **gekennzeichnet durch** eine Zwischenschiene (3) und einen weiteren Käfig (6, 6') mit weiteren Wälzkörpern (7).

6. Backofen, **gekennzeichnet durch** eine Auszugsführung nach einem der Ansprüche 1 bis 5.

7. Spülmaschine, **gekennzeichnet durch** eine Auszugsführung nach einem der Ansprüche 1 bis 5.
